## Europäisches Patentamt
## European Patent Office
## Office européen des brevets

(19)

(11) Veröffentlichungsnummer: **0 210 465 B1**

# (12) EUROPÄISCHE PATENTSCHRIFT

(45) Veröffentlichungstag der Patentschrift: **16.10.91**

(21) Anmeldenummer: **86109109.8**

(22) Anmeldetag: **03.07.86**

(51) Int. Cl.⁵: **B60R 19/42**, B60R 19/38, B60R 19/48, B60R 3/02

(54) Schutzvorrichtung für ein Kraftfahrzeug.

(30) Priorität: **29.07.85 DE 3527145**

(43) Veröffentlichungstag der Anmeldung:
**04.02.87 Patentblatt 87/06**

(45) Bekanntmachung des Hinweises auf die
Patenterteilung:
**16.10.91 Patentblatt 91/42**

(84) Benannte Vertragsstaaten:
**AT BE CH DE FR GB IT LI LU NL SE**

(56) Entgegenhaltungen:
**DE-B- 1 755 862**
**DE-U- 7 146 977**
**DE-U- 7 907 724**
**FR-A- 2 368 388**
**US-A- 3 758 134**

(73) Patentinhaber: **Rumpp, Gerhard**
**Schornstrasse 2**
**W-8084 Inning/Ammersee(DE)**

(72) Erfinder: **Rumpp, Gerhard**
**Schornstrasse 2**
**W-8084 Inning/Ammersee(DE)**

(74) Vertreter: **Patentanwälte Grünecker, Kinkeldey, Stockmair & Partner**
**Maximilianstrasse 58**
**W-8000 München 22(DE)**

EP 0 210 465 B1

## Beschreibung

Die Erfindung bezieht sich auf eine Schutzvorrichtung für ein Kraftfahrzeug mit einem im seitlichen unteren Bereich einer Karosserie des Kraftfahrzeugs angeordneten, sich im wesentlichen parallel zur Kraftfahrzeuglängsachse in einem Bereich zwischen einem Vorderrad und einem Hinterrad erstreckenden Träger.

Schutzvorrichtungen der eingangs genannten Art finden vorzugsweise bei Fahrzeugen Anwendung, welche auf schlechten Wegstrecken oder im Gelände benutzt werden, um bei einem Aufsitzen der Karosserie auf Bodenunebenheiten die Karosserie vor Beschädigungen zu schützen. Derartige Schutzvorrichtungen sind deshalb fest mit der Karosserie verbunden, wobei die Lage des die Schutzvorrichtung im wesentlichen bildenden Trägers so im seitlichen unteren Bereich der Karosserie gewählt ist, daß einerseits die Schutzwirkung für die Karosserie gewährleistet ist und andererseits die Betätigbarkeit des Kraftfahrzeuges, insbesondere das Öffnen der Türen nicht behindert wird. Nicht nur aus Gründen der Optik, sondern vor allem aus Gründen der Verkehrssicherheit ist der Träger in direkter Nähe an der Karosserie angeordnet, da von der Karosserie abstehende Teile zu einem erheblichen Verletzungsrisiko für Fußgänger oder Radfahrer führen.

Bei den mit einer derartigen seitlichen Schutzvorrichtung versehenen Kraftfahrzeugen handelt es sich zumeist um geländegängige Fahrzeuge, die eine sehr hohe Bodenfreiheit und eine relativ große Gesamthöhe der Karosserie aufweisen. Aus diesem Grund ist die Dachfläche des Fahrzeuges für eine Bedienungsperson relativ schlecht zugänglich, es ist insbesondere für eine neben dem Fahrzeug stehende Bedienungsperson kaum möglich, Gegenstände auf dem Dach zu befestigen oder von diesem abzunehmen. Um einen höheren Standort zu erreichen, wird üblicherweise eine der Fahrzeugtüren geöffnet, so daß die Bedienungsperson sich auf die Türschwelle stellen kann, um besser an die auf dem Dach des Fahrzeugs befindlichen Gegenstände heranzureichen. Eine derartige Vorgehensweise erweist sich doch als sehr unpraktisch, da die Bedienungsperson sich mit einer Hand am Fahrzeug festhalten muß, um nicht herunterzufallen und somit nur eine Hand für weitere Tätigkeiten frei hat. Ein weiterer Nachteil dieser Vorgehensweise besteht darin, daß zumindest eine Fahrzeugtüre im geöffneten Zustand verbleiben muß, wodurch der Innenraum des Fahrzeugs den vorherrschenden Witterungsverhältnissen, wie etwa Regen, Schnee oder Sturm ausgesetzt ist. Weiterhin führt das Betreten der Türschwelle durch die Bedienungsperson zu einer Verschmutzung des Innenraums des Kraftfahrzeuges und zu einer Beschädigung der Lackierung der Türschwelle und der an ihr befestigten Türdichtung. Ein Betreten des Trägers der seitlichen Schutzvorrichtung durch die Bedienungsperson scheidet aus, da die Schutzvorrichtung aus sicherheitstechnischen Gründen sich in enger Anlage an der Karosserie des Kraftfahrzeuges befinden muß.

Aus der US-A-1 826 979 ist eine seitliche Schutzvorrichtung bekannt, welche in ein die Trittfläche bildendes Trittbrett integriert ist. Das seitlich über die Karosserie hervorstehende Trittbrett geht an seinem vorderen bzw. hinteren Ende jeweils in einen Kotflügel über. Das Trittbrett ist so gelagert, daß es in seitlicher Richtung zur Karosseriemittelebene hin verschiebbar ist, und wird mittels einer Federeinrichtung in Richtung auf seine außenliegende Normalstellung vorgespannt. Sollte das Fahrzeug im Bereich des Trittbretts in Berührung mit einem feststehenden Gegenstand kommen, so ist das Trittbrett in Fahrzeugquerrichtung in einer horizontalen Ebene über seine gesamte Länge elastisch verschiebbar. Auf diese Weise sollen Beschädigungen des Kraftfahrzeuges vermieden werden. Die beiden in der Normalstellung des Trittbretts mit diesem fluchtenden Kotflügel des Kraftfahrzeugs sind ortsfest mit der Karosserie verbunden und somit bei einem Aufprall auf ein Hindernis nicht verschiebbar. Diese bekannte Schutzvorrichtung weist deshalb den Nachteil auf, daß bei einer horizontalen Querverschiebung des Trittbretts im übergangsbereich zu den Kotflügeln scharfe Kanten auftreten, welche ein Sicherheitsrisiko für andere Verkehrsteilnehmer darstellen. Weiterhin besteht die Gefahr, daß die Kotflügel selbst beschädigt werden. Da außerdem bei dieser bekannten Schutzvorrichtung das Trittbrett in seiner Normalstellung seitlich über die Karosserie hervorsteht, ergibt sich eine mit den heutigen Sicherheitsvorschriften nicht zu vereinbarende Gefährcuns anderer Verkehrsteilnehmer.

Der Erfindung liegt daher die Aufgabe zugrunde, eine seitliche Schutzvorrichtung der eingangs genannten Art zu schaffen, welche unter Gewährleisten der erleichterten Zugänglichkeit der Dachfläche des Fahrzeugs bei einfachem Aufbau den Sicherheitsanforderungen hinsichtlich der Gefährdung anderer Verkehrsteilnehmer genügt.

Diese Aufgabe wird erfindungsgemäß durch die kennzeichnenden Merkmale des Anspruchs 1 gelöst.

Die erfindungsgemäß vorgesehene schwenkbare Anordnung des Trägers der Schutzvorrichtung ermöglicht es einerseits, den Träger zur Karosserie hin in seine Normallage einzuschwenken, in der er praktisch nicht über die Karosserie vorsteht und somit keine Gefährdung für andere Verkehrsteilnehmer darstellt. Andererseits kann der Träger der erfindungsgemäßen Schutzvorrichtung soweit ausgeschwenkt werden, daß die Trittfläche zur Verfügung steht, auf der die Bedienungsperson steht, ohne sich am Kraftfahrzeug festhalten zu müssen. Somit hat die Bedienungsperson beide Hände frei, um Gegenstände auf dem Dach des Fahrzeugs zu befestigen oder von diesem zu lösen. Durch die Anordnung der Drehachse des Trägers im Bereich des Vorderrades wird erreicht, daß lediglich der hintere Teil der seitlichen Schutzvorrichtung bzw. des sie bildenden Trägers vom Fahrzeug abgespreizt wird. Sollte die Bedienungsperson nach der Benutzung der Trittfläche vergessen, den Träger in seine Normallage zurückzuschwenken, führt dies zu keiner Verkehrsgefährdung, da der Träger bei Berührung mit einem Hindernis bei Vorwärtsfahrt des Kraftfahrzeugs von selbst in eine parallel zur Karosserie gelegene Normallage zurückgeschwenkt wird. Somit erfüllt die erfindungsgemäße Schutzvorrichtung auch in diesem Fall die Anforderungen im Hinblick auf die Verkehrssicherheit. Dies insbesondere auch deshalb, da das in Fahrtrichtung vordere Ende der Schutzvorrichtung keine hervorstehende Ecke bildet, die die Verkehrssicherheit erheblich beeinträchtigen könnte.

Mit Vorteil ist die erfindungsgemäße Schutzvorrichtung so ausgestaltet, daß bei Stand des Kraftfahrzeugs auf einer horizontalen Ebene die Drehachse im wesentlichen vertikal und die Trittfläche im ausgeschwenkten Zustand in wesentlichen horizontal angeordnet sind. Damit wird für die auf der Trittfläche stehende Bedienungsperson ein Höchstmaß an Sicherheit erzielt, da die Gefahr eines Abrutschens nicht gegeben ist. Weiterhin kann die Ausbildung der Drehachse und ihre Anordnung an die Karosserie in besonders einfacher Weise an einem üblicherweise an einer derartigen Karosserie bereits vorhandenen Befestigungspunkt erfolgen.

Mit Vorteil ist die Trittfläche an dem dem Hinterrad zugewandten Bereich des Trägers angeordnet. Bei den üblicherweise vorliegenden kastenförmigen Karosserien von Geländewagen ermöglicht diese Anordnung der Trittfläche einen bestmöglichen Zugriff auf das gesamte Dach des Kraftfahrzeugs. Weiterhin ist es möglich, die Vordertür des Kraftfahrzeuges zu öffnen, während eine Bedienungsperson auf der Trittfläche steht.

Um eine sichere Lagerung des Trägers an der Karosserie des Kraftfahrzeuges zu gewährleisten und um sowohl im ausgeschwenkten Zustand eine Übertragung der von der Bedienungsperson auf den Träger aufgebrachten Kräfte, als auch im zurückgeschwenkten Zustand einen sicheren Schutz der Karosserie bei Bodenberührungen zu gewährleisten, ist erfindungsgemäß vorgesehen, daß der Träger an dem dem Hinterrad zugewandten Bereich mittels einer Lagerung an der Karosserie gelagert ist, wobei die Lagerung einen am Träger befestigten Führungsarm und zumindest eine im unteren Bereich der Karosserie angeordnete, mit dem Führungsarm zusammenwirkende Führungsschiene aufweist. Auf diese Weise ist unter allen Schwenkzuständen eine sichere Übertragung der aufgebrachten Kräfte gewährleistet.

Eine besonders vorteilhafte Ausgestaltung der erfindungsgemäßen Schutzvorrichtung ist dadurch gegeben, daß die Trittfläche mit einer im ausgeschwenkten Zustand des Trägers nach oben ausklappbaren Trittstufe versehen ist. Durch diese zusätzliche Trittstufe können einerseits auch kleinere Bedienungspersonen mit Sicherheit auf das Dach des Kraftfahrzeuges fassen und auf diesem befestigte Gegenstände ergreifen, andererseits ist es möglich, besonders große und sperrige Gegenstände, wie z.B. Fahrräder, in sicherer Weise auf dem Kraftfahrzeugdach zu befestigen oder von diesem herunterzunehmen.

Eine besonders günstige Ausgestaltung der erfindungsgemässen Schutzvorrichtung ist auch weiterhin dadurch gegeben, daß die Verriegelungsvorrichtung einen am Träger gelagerten Betätigungshebel und einen mit der Karosserie in Eingriff bringbaren, am Träger gelagerten, mit dem Betätigungshebel zusammenwirkenden Verriegelungshebel aufweist, welcher mittels eines elastischen Elements in seine Verriegelungsstellung vorgespannt ist. Auf diese Weise kann sichergestellt werden, daß der Träger in seinem zur Karosserie hin verschwenkten Zustand in sicherer Weise verriegelt ist und die Gefahr einer unbeabsichtigten Verschwenkung während der Fahrt des Kraftfahrzeuges ausgeschlossen ist. Durch die Vorspannung des Verriegelungshebels mittels eines elastischen Elements wird dieser auch bei starken Erschütterungen der Fahrzeugkarosserie stets in einer Verriegelungsstellung gehalten. Eine vorteilhafte Ausgestaltung des Bedienungshebels ist auch dadurch gegeben, daß dieser an seiner dem Vorderrad zugewandten Seite am Träger schwenkbar gelagert ist. Da Geländewagen üblicherweise in Vorwärtsfahrtrichtung im Gelände bewegt werden, führt somit eine Berührung des Betätigungshebels mit feststehenden Hindernissen nicht zu einer Lösung der Verriegelungsvorrichtung.

Im folgenden wird die Erfindung anhand von Ausführungsbeispielen in Verbindung mit der Zeichnung beschrieben. Dabei zeigt:

Fig. 1 eine schematische, perspektivische Darstellung eines mit einer erfindungsgemäßen Schutzvorrichtung ausgestatteten Fahrzeuges, wobei die Schutzvorrichtung im ausgeschwenkten Zustand gezeigt ist,

Fig. 2 eine Draufsicht auf ein erstes Ausführungsbeispiel der erfindungsgemäßen Schutzvorrichtung,

Fig. 3 eine perspektivische Teilansicht eines zweiten Ausführungsbeispiels und

Fig. 4 eine Draufsicht auf ein drittes Ausführungsbeispiel der erfindungsgemäßen Schutzvorrichtung.

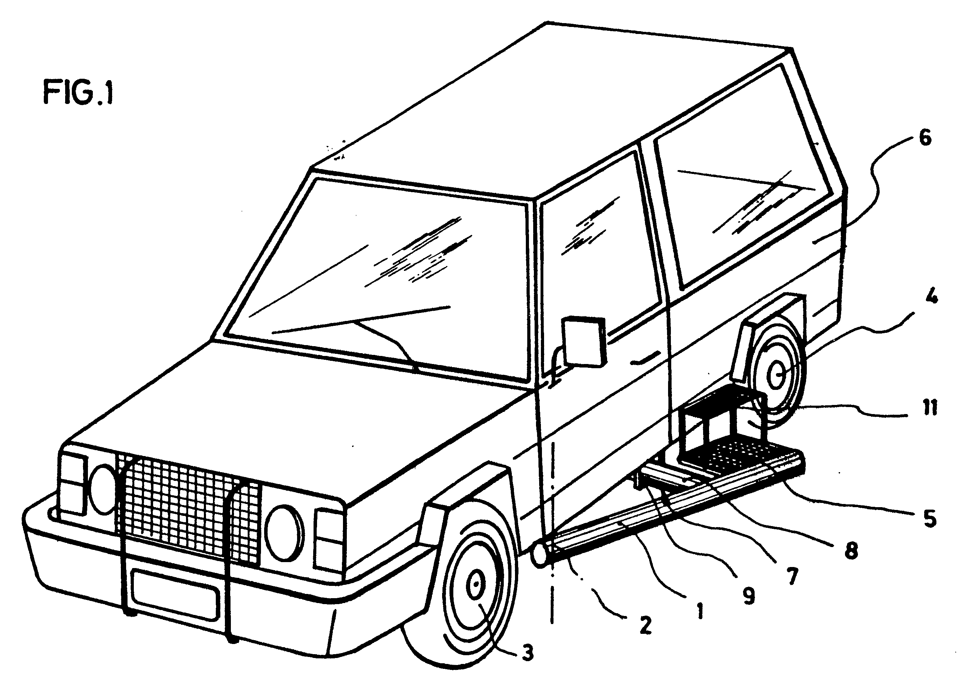

In Fig. 1 ist in schematischer Weise ein geländegängiges Kraftfahrzeug dargestellt. Eine Karosserie 6 ist mit Vorderrädern 3 und Hinterrädern 4 versehen und weist in dem seitlichen unteren Bereich zwischen dem Vorderrad 3 und dem Hinterrad 4 eine seitliche Schutzvorrichtung auf, welche in Form eines Trägers 1 ausgebildet ist, welcher um eine Drehachse 2 schwenkbar ist. Die Drehachse 2 ist in vertikaler Richtung angeordnet und an dem dem Vorderrad 3 zugewandten Endbereich des Trägers 1 sowie an einem an das Vorderrad 3 angrenzenden Bereich der Karosserie 6 angeordnet. Die erfindungsgemäße Schutzvorrichtung weist eine an dem Träger 1 befestigte Trittfläche 5 auf, welche im ausgeschwenkten Zustand des Trägers 1 zugänglich wird. An der Trittfläche 5 ist eine ausklappbare Trittstufe 11 befestigt, welche im nachfolgenden in Verbindung mit Fig. 3 im einzelnen beschrieben wird. Der Träger 1 ist zusätzlich zu seiner Lagerung an der Drehachse 2 mittels einer Lagerung 7 an der Karosserie 6 gelagert.

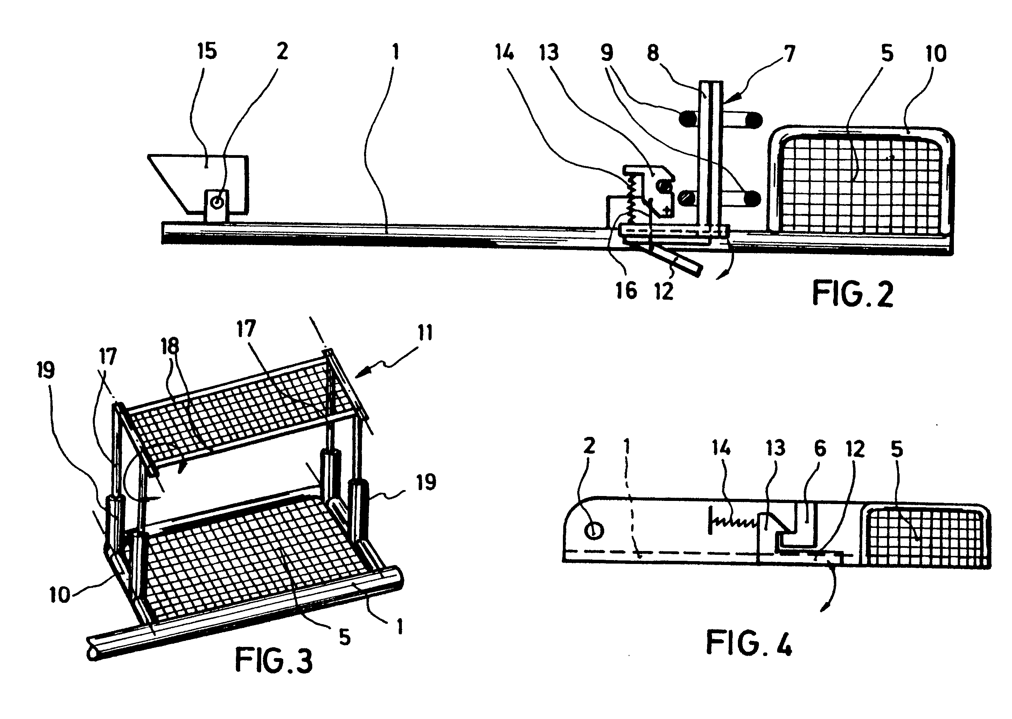

Figur 2 zeigt in der Draufsicht ein erstes Ausführungsbeispiel der erfindungsgemäßen Schutzvorrichtung. Auf die Darstellung der Karosserieteile sowie der Vorder- und Hinterräder des Kraftfahrzeuges wurde verzichtet. In Fig. 2 ist die erfindungsgemäße Schutzvorrichtung in zurückgeschwenkter, verriegelter, fahrbereiter Stellung gezeigt. Der Träger 1 ist an seinem in Fahrtrichtung nach vorne weisenden Endbereich um die Drehachse 2 schwenkbar gelagert. Karosserieseitig ist die Drehachse 2 an einer Halterung 15 vorgesehen, welche in im einzelnen nicht dargestellter Weise, z.B. mittels einer Schraubverbindung mit der Karosserie 6 verbunden ist. Die Trittfläche 5, welche an dem in Fahrtrichtung nach hinten weisenden Ende des Trägers 1 befestigt ist, ist in Form eines in der Draufsicht U-förmigen Bügels 10 ausgestaltet. Der Bügel 10 ist fest mit dem Träger 1 verbunden und weist zur Ermöglichung eines sicheren Standes eine im einzelnen nicht gezeigte Abdeckung, z.B. ein Tränenblech auf. In Fahrtrichtung gesehen vor dem Bügel 10 ist ein Führungsarm 8 an dem Träger 1 befestigt. Der Führungsarm 8 kann, wie auch der Träger 1 und der Bügel 10 in Form eines Rohres ausgestaltet sein. An der Karosserie 6 ist zumindest eine Führungsschiene 9 befestigt, welche bei dem in den Fig. 1 und 2 dargestellten Ausführungsbeispiel jeweils in Form eines U-förmigen Bügels ausgebildet sind, dessen freie Enden nach oben weisen und an der Karosserie befestigt sind. In dem durch den jeweiligen Bügel gebildeten Zwischenraum ist der Führungsarm 8 derart an der Karosserie 6 geführt, daß eine Verkippung oder Verwindung des Trägers 1 und der an ihm befestigten Trittfläche 5 verhindert wird. Es ist jedoch möglich, die aus dem Führungsarm 8 und den Führungsschienen 9 gebildete Lagerung 7 in anderer Weise auszugestalten, z.B. in Form einer teleskopartigen Führung aus mehreren Rohren. In Fahrtrichtung gesehen vor der Lagerung 7 ist eine Verriegelungsvorrichtung vorgesehen, mittels derer der Träger 1 in seinem zurückgeschwenken Zustand an der Karosserie 6 verriegelt werden kann. Die Verriegelungsvorrichtung weist einen durch eine Bedienungsperson zu betätigenden Betätigungshebel 12 auf, welcher so an dem Träger 1 gelagert ist, daß sein Schwenkpunkt an dem in Fahrtrichtung vorne liegenden Endbereich angeordnet ist, so daß ein unbeabsichtigtes Betätigen des Betätigungshebels 12 durch Berührung mit einem feststehenden Hindernis bei Fahrt des Kraftfahrzeuges ausgeschlossen ist. Der Betätigungshebel 12 ist über einen Hebel 16 mit einem Verriegelungshebel 13 derart gelenkig verbunden, daß der ebenfalls am Träger 1 gelagerte Verriegelungshebel 13 bei einer Betätigung des Betätigungshebels 12 verschwenkt wird. Der Verriegelungshebel 13 ist mit einer Nut versehen, welche mit einem feststehenden Bereich der Fahrzeugkarosserie 6 in Eingriff bringbar ist. Der Verriegelungshebel 13 wird mittels eines elastischen Elements 14, welches in dem gezeigten Ausführungsbeispiel in Form einer Druckfeder ausgebildet ist, in seine Verriegelungsstellung vorgespannt. Eine Abschrägung des karosserieseitigen Bereichs des Verriegelungshebels 13 bewirkt, daß dieser bei einem Zurückschwenken des Trägers 1 zurückgeschwenkt wird, um anschließend in seine Eingriffsstellung mit der Karosserie 6 zu kommen. Auf diese Weise erfolgt eine selbsttätige Verriegelung beim Zurückschwenken des Trägers 1. Der Betätigungshebel 12 ist in einer Vertiefung des Trägers 1 an diesem gelagert, so daß die Außenkante des Trägers 1 keine vorspringenden Teile aufweist.

In Fig. 3 ist ein weiteres Ausführungsbeispiel der erfindungsgemäßen Schutzvorrichtung dargestellt. Bei diesem Ausführungsbeispiel ist der Bügel 10 in analoger Weise wie in Fig. 2 ausgebildet und an dem Träger 1 befestigt. Auf der Oberseite des Bügels 10 ist eine Trittstufe 11 angeordnet. Die Trittstufe 11 weist jeweils U-förmige Stützen 17 auf, deren freie Schenkel nach unten weisen und an dem Bügel 10 so gelagert sind, daß sie zumindest um einen Winkelbetrag von 90° seitlich verschwenkbar sind. Die Basisteile der Stützen 17 sind jeweils mit den Enden zweier zueinander paralleler Streben 18 gelenkig verbunden. Die Trittstufe 11 ist somit im wesentlichen in Form eines parallelogrammartigen Viergelenkgestells aufgebaut, welches nach einer Seite verschwenkbar ist. In diesem verschwenkten Zustand ist die Trittstufe 11 auf eine Höhe reduziert, welche im wesentlichen dem Durchmesser der verwendeten Stützen 17 und Streben 18 entspricht. Nachdem der Träger 1 von der Karosserie 6 weggeschwenkt wurde, gelangt sowohl der Bügel 10 mit der Trittfläche 5 als auch die zusammengeklappte Trittstufe 11 in den Zugriffsbereich der Bedienungsperson. Diese kann nunmehr die Trittstufe 11 nach oben verschwenken, so daß das Gestell der Trittstufe 11 in seine Betriebsposition, in welcher die Stützen 17 im wesentlichen vertikal angeordnet sind, kommt. Die Fixierung in dieser Betriebsstellung erfolgt bei dem gezeigten Ausführungsbeispiel dadurch, daß Muffen 19, welche jeweils am unteren Ende der freien Schenkel der Stützen 17 vorgesehen sind, über die scharnierartigen Befestigungsgelenke zwischen den Stützen 17 und dem Bügel 10 übergeschoben werden, so daß ein Zusammenklappen der Trittstufe 11 verhindert wird.

Figur 4 zeigt in schematischer Darstellung eine Draufsicht auf ein weiteres Ausführungsbeispiel der erfindungsgemäßen Schutzvorrichtung. Bei diesem Ausführungsbeispiel sind der Betätigungshebel 12 und der Verriegelungshebel 13 einstückig ausgebildet. Zur Freigabe des Verriegelungshebels 13 wird der Betätigungshebel nicht, wie bei dem in Fig. 2 gezeigten Ausführungsbeispiel, von der Fahrzeugkarosserie weggeschwenkt, sondern zu dieser hingedrückt, so daß der Verriegelungshebel 13 den feststehenden Bereich der Karosserie 6 freigibt, so daß der Träger 1 von der Karosserie weggeschwenkt werden kann. Auch bei diesem Ausführungsbeispiel ist, wie bei dem Ausführungsbeispiel nach Fig. 2, der Betätigungshebel 12 so in einer Vertiefung des Trägers 1 angeordnet, daß eine durch den Betrieb des Fahrzeugs auf den Träger 1 aufgebrachte Belastung nicht auf den Verriegelungshebel einwirken kann.

Die Erfindung ist nicht auf die in den Ausführungsbeispielen dargestellte Anordnung der Drehachse (2) für den Träger 1 beschränkt. Der Leitgedanke der Erfindung liegt darin, den Träger 1 um eine Drehachse 2 zu verschwenken, welche so angeordnet ist, daß im ausgeschwenkten Zustand die an dem Träger 1 befestigte Trittfläche 5 an einer Stelle des Trägers, welche hinter der Drehachse 2 gelegen ist, für den Benutzer zugänglich wird. Es ist somit nicht nur, wie in den Ausführungsbeispielen gezeigt, möglich, die Drehachse 2 am vordersten Ende oder im vorderen Endbereich des Trägers 1 anzuordnen, vielmehr ist es auch möglich, den Träger 1 in seiner Länge zu unterteilen und nur einen hinteren Teil in entsprechender Weise ausschwenkbar auszugestalten. Auch die Lage der Trittfläche 5 ist nicht auf das dem Hinterrad zugewandte Ende des Trägers 1 beschränkt, vielmehr ist es in Abhängigkeit von dem maximal möglichen Schwenkwinkel auch möglich, die Trittfläche 5 an jeder anderen beliebigen Stelle anzuordnen.

**Patentansprüche**

1. Seitliche Schutzvorrichtung für die Karosserie eines Kraftfahrzeugs, mit einem im seitlichen unteren Bereich der Karosserie angeordneten, sich im wesentlichen parallel zur Fahrzeuglängsachse zwischen einem Vorderrad (3) und einem Hinterrad (4) erstreckenden, mit einer Trittfläche (5) versehenen Träger (1), **dadurch gekennzeichnet,** daß der Träger (1) um eine im Bereich des Vorderrads (3) angeordnete Drehachse (2) seitlich gegenüber der Karosserie (6) ausschwenkbar ist, daß die Trittfläche (5) im ausgeschwenkten Zustand des Trägers (1) zugänglich ist, und daß der Träger (1) mit einer im zur Karosserie hin geschwenkten Zustand wirksamen Verriegelungsvorrichtung ausgestattet ist, wobei die Trittfläche (5) im eingeschwenkten Zustand nicht über die übrige Fahrzeugkontur hinausragt.

2. Schutzvorrichtung nach Anspruch 1, dadurch **gekennzeichnet,** daß bei Stand des Kraftfahrzeugs auf einer horizontalen Ebene die Drehachse (2) im wesentlichen vertikal und die Trittfläche (5) im ausgeschwenkten Zustand im wesentlichen horizontal angeordnet sind.

3. Schutzvorrichtung nach einem der Ansprüche 1 oder 2, dadurch **gekennzeichnet,** daß die Trittfläche (5) in dem dem Hinterrad (4) zugewandten Bereich des Trägers (1) angeordnet ist.

4. Schutzvorrichtung nach einem der Ansprüche 1 bis 3, dadurch **gekennzeichnet,** daß der Träger (1) mit dem dem Hinterrad (4) zugewandten Bereich mittels einer Lagerung (7) an der Karosserie (6) oder Teilen des Fahrzeugrahmens gelagert ist.

5. Schutzvorrichtung nach Anspruch 4, dadurch **gekennzeichnet,** daß die Lagerung (7) einen am Träger (1) befestigten Führungsarm (8) und zumindest eine im unteren Bereich der Karosserie angeordnete, mit dem Führungsarm (8) zusammenwirkende Führungsschiene (9) aufweist.

6. Schutzvorrichtung nach einem der Ansprüche 1 bis 5, dadurch **gekennzeichnet,** daß die Trittfläche (5) in Form eines auf der der Karosserie (6) zugewandten Seite am Träger (1) befestigten, mit einer Abdeckung versehenen U-förmigen Bügels (10) ausgestaltet ist.

7. Schutzvorrichtung nach einem der Ansprüche 1 bis 6, dadurch **gekennzeichnet, daß** die Trittfläche (5) mit einer im ausgeschwenkten Zustand des Trägers (1) nach oben ausklappbaren Trittstufe (11) versehen ist.

8. Schutzvorrichtung nach Anspruch 7, dadurch **gekennzeichnet, daß** die Trittstufe (11) in Form eines am Bügel (10) gelagerten parallelogrammartigen Rahmens ausgebildet ist.

9. Schutzvorrichtung nach einem der Ansprüche 1 bis 8, **dadurch gekennzeichnet, daß** die Verriegelungsvorrichtung einen am Träger (1) gelagerten Betätigungshebel (12) und einen mit der Karosserie (6) in Eingriff bringbaren, am Träger (1) gelagerten, mit dem Betätigungshebel (12) zusammenwirkenden Verriegelungshebel (13) aufweist.

10. Schutzvorrichtung nach Anspruch 9, **dadurch gekennzeichnet, daß** der Verriegelungshebel (13) mittels eines elastischen Elements (14) in seine Verriegelungsstellung vorgespannt ist.

11. Schutzvorrichtung nach einem der Ansprüche 9 oder 10, **dadurch gekennzeichnet, daß** der Betätigungshebel (12) an seiner dem Vorderrad zugewandten Seite am Träger (1) schwenkbar gelagert ist.

## Claims

1. Lateral protective device for the body of a motor vehicle, comprising a support (1), which is arranged in the lateral lower region of the body and extends substantially parallel to the vehicle's longitudinal axis between a front wheel (3) and a rear wheel (4), and which is provided with a foot plate (5), **characterised in that** the support (1) is pivotable outwards relative to the body (6) around an axis of rotation (2) in the area of the front wheel (3), in that the foot plate (5) is accessible whilst the support (1) is pivoted outwards, and in that the support (1) is provided with a locking device which is effective only when pivoted towards the body, in which respect the foot plate (5) in its inward pivoted state does not protrude beyond the remaining vehicle contour.

2. Protective device according to claim 1, **characterised in that,** with the motor vehicle stationary on a horizontal plane, the axis of rotation (2) is substantially vertically arranged, and the foot plate (5) in its outward pivoted state is substantially horizontally arranged.

3. Protective device according to one of claims 1 or 2, **characterised in that** the foot plate (5) is arranged in the section of the support (1) which faces towards the rear wheel (4).

4. Protective device according to one of claims 1 to 3, **characterised in that** the support (1) is mounted at its section facing towards the rear wheel (4) to the body (6) or parts of the chassis by way of a mounting.

5. Protective device according to claim 4, **characterised in that** the mounting (7) comprises a guide arm (8), which is attached to the support (1), and at least one guide rail (9), which is arranged in the lower region of the body and cooperates with the guide arm (8).

6. Protective device according to one of claims 1 to 5, **characterised in that** the foot plate (5) is arranged in the form of a U-shaped yoke (10), which is attached to the support (1) at the side facing the body (6) and provided with a covering.

7. Protective device according to one of claims 1 to 6, **characterised in that** the foot plate (5) is provided with a foot step (11) which is unfolded upwards when the support (1) is pivoted outwards..

8. Protective device according to claim 7, **characterised in that** the foot step (11) is arranged in the shape of a parallelogram-shaped frame which is attached to the yoke (10).

9. Protective device according to one of claims 1 to 8, **characterised in that** the bolting device comprises an operating lever (12) mounted to the support (1), and a bolting lever (13) which engages the body (6), is attached to the support (1) and co-operates with the operating lever (12).

10. Protective device according to claim 9, **characterised in that** the bolting lever (13) is pretensioned in its locking position by means of an elastic element (14).

11. Protective device according to one of claims 9 or 10, **characterised in that** the operating lever (12) is pivotably mounted at its side facing towards the front wheel to support (1).

## Revendications

1.  Dispositif de protection latéral pour la carrosserie d'un véhicule à moteur comprenant un longeron (1) qui est disposé dans la zone latérale inférieure de la carosserie, s'étend pour l'essentiel parallèlement à l'axe longitudinal du véhicule entre une roue avant (3) et une roue arrière (4) et est équipé d'un marchepied (5), caractérisé en ce que le longeron (1) peut basculer latéralement vers l'extérieur par rapport à la carosserie (6) autour d'un axe de rotation (2) disposé dans la zone de la roue avant (3), en ce que le marchepied (5) est accessible lorsque le longeron (1) est en position de basculage et en ce que le longeron (1) est équipé d'un dispositif de verrouillage agissant en position de basculage vers la carosserie, le marchepied (5) ne dépassant pas du profil du véhicule lorsqu'il est replié.

2.  Dispositif de protection selon la revendication 1, caractérisé en ce que lorsque le véhicule à moteur repose sur un plan horizontal, l'axe de rotation (2) est placé pour l'essentiel verticalement et le marchepied (5) en position de basculage pour l'essentiel horizontalement.

3.  Dispositif de protection selon l'une des revendications 1 ou 2, caractérisé en ce que le marchepied (5) est disposé dans la zone du longeron (1) qui est tournée vers la roue arrière (4).

4.  Dispositif de protection selon l'une des revendications 1 à 3, caractérisé en ce que le longeron (1) est monté sur la carosserie (6) ou sur des pièces du châssis du véhicule, dans la zone tournée vers la roue arrière (4), à l'aide d'un support (7).

5.  Dispositif de protection selon la revendication 4, caractérisé en ce que le support (7) présente un bras conducteur (8) fixé sur le longeron (1) et au moins un rail conducteur (9) placé dans la zone inférieure de la caroserie et coopérant avec le bras conducteur (8).

6.  Dispositif de protection selon l'une des revendications 1 à 5, caractérisé en ce que le marchepied (5) est réalisé sous forme d'un étrier en U (10) qui est fixé sur le longeron (1) du côté tourné vers la carosserie (6) et est muni d'un revêtement.

7.  Dispositif de protection selon l'une des revendications 1 à 6, caractérisé en ce que le marchepied (5) est muni d'une marche (11) pouvant être dépliée vers le haut lorsque le longeron (1) est en position de basculage.

8.  Dispositif de protection selon la revendication 7, caractérisé en ce que la marche (11) est réalisée sous la forme d'un cadre de type parallélogramme monté sur l'étrier (10).

9.  Dispositif de protection selon l'une des revendications 1 à 8, caractérisé en ce que le dispositif de verrouillage présente un levier de commande (12) monté sur le longeron (1) et un levier de verrouillage (13) qui peut s'engager dans la carosserie (6), est monté sur le longeron (1) et coopère avec le levier de commande (12).

10. Dispositif de protection selon la revendication 9, caractérisé en ce que le levier de verrouillage (13) est précontraint dans sa position de verrouillage à l'aide d'un élément élastique (14).

11. Dispositif de protection selon l'une des revendications 9 ou 10, caractérisé en ce que le levier de commande (12) est monté pivotant sur le longeron (1), sur son côté qui est tourné vers la roue avant.

FIG.1

FIG.2

FIG.3

FIG.4

EP 0 210 465 B1